Europäisches Patentamt

European Patent Office

Office européen des brevets

(19)

(11) Veröffentlichungsnummer : **0 223 174**
**B1**

(12) **EUROPÄISCHE PATENTSCHRIFT**

(45) Veröffentlichungstag der Patentschrift :
02.11.89

(21) Anmeldenummer : 86115544.8

(22) Anmeldetag : 10.11.86

(51) Int. Cl.⁴ : **F 16 L 23/00**, E 06 B 7/086,
**F 24 F 13/15**

(54) **Rahmenprofil.**

(30) Priorität : 19.11.85 CH 4928/85

(43) Veröffentlichungstag der Anmeldung :
27.05.87 Patentblatt 87/22

(45) Bekanntmachung des Hinweises auf die Patenterteilung : 02.11.89 Patentblatt 89/44

(84) Benannte Vertragsstaaten :
AT BE CH DE ES FR GB IT LI NL SE

(56) Entgegenhaltungen :
EP--A-- 0 143 150
EP--A-- 0 152 512
GB--A-- 1 053 089
US--A-- 3 653 317

(73) Patentinhaber : **Schmidlin AG**
**Zürichstrasse 19**
**CH-8910 Affoltern a.A. (CH)**

(72) Erfinder : **Schmidlin, Walter**
**Mühlrütistrasse 12**
**CH-8910 Affoltern am Albis (CH)**

(74) Vertreter : **Scheidegger, Zwicky, Werner & Co.**
**Stampfenbachstrasse 48 Postfach**
**CH-8023 Zürich (CH)**

EP 0 223 174 B1

**Beschreibung**

Die Erfindung betrifft einen Rahmen für die Anordnung von drehbaren Klappen in einem Lüftungskanal, bestehend aus im wesentlichen U-förmigen Querschnitt aufweisenden Rahmenprofilen, die etwa auf der Längsmitte des die beiden Schenkel verbindenden Stegs eine über die Länge des Rahmenprofils und parallel zu den Schenkeln sich erstreckende, zur einen Stegseite hin offene T-Nut aufweisen, in die mit Drehlagerungen für die Klappen versehene schienenförmige Körper eingeschoben sind.

Ein solches Rahmenprofil zur Bildung eines Rahmens für die Anordnung von drehbaren Klappen ist aus der USA-3 653 317 bekannt. Bei dieser bekannten Anordnung ist jede Klappe mit einem bis vor den Rahmen sich erstreckenden Betätigungshebel verbunden, um alle Klappen durch eine die Betätigungshebel verbindende gemeinsame Zugstange verschwenken zu können. Eine Zugstange ausserhalb des Rahmens ist unzweckmässig, wenn an den Rahmen auf beiden Seiten Lüftungskanäle angeschlossen werden sollen. Eine vor dem Rahmen sich erstreckende Zugstange lässt es nicht zu, an der betreffenden Seite einen Kanal an den Rahmen anzuschliessen. Die T-förmige Nut in dem Rahmenprofil dient bei diesem bekannten Rahmen dazu, auf gegenüberliegenden Rahmenseiten jeweils schienenförmige Körper mit einem von diesem vorstehenden Bolzen als Achskörper für die Drehlagerung der Klappen einzuschieben.

Andererseits ist es aus der GB-A-1 053 089 bekannt, für die Anordnung von drehbaren Klappen oder Lamellen in einem Lüftungskanal im Querschnitt im wesentlichen U-förmige Rahmenprofile zu verwenden, bei denen in dem die beiden Schenkel des Profils verbindenden Steg für die Aufnahme der Drehlagerung der Klappen in genauen Abständen voneinander Löcher gestanzt und dann entgratet werden müssen, um in diese Löcher dann Kunststoffbuchsen einzusetzen, die die Drehlagerung der Klappen aufnehmen, wobei diese Drehlagerung jeweils aus einem Zapfen an einem Zahnrad besteht, das jeweils mit einer Klappe in fester Verbindung steht, sodass mehrere parallel zueinander angeordnete Klappen durch die in Eingriff stehenden Zahnräder gedreht werden. Damit die Mehrzahl von Zahnrädern korrekt miteinander in Eingriff stehen und die Klappen dicht gegeneinander schliessen, müssen die Achsabstände für die in dem Rahmen herzustellenden Drehlagerungen sehr genau eingehalten werden. Diese Herstellungsmethode verlangt ein sehr sorgfältiges Arbeiten und ist arbeitsintensiv.

Die der vorliegenden Erfindung zugrunde liegende Aufgabe bestand darin, diese arbeitsintensive Herstellungsmethode zu vereinfachen und damit wesentlich wirtschaftlicher zu gestalten. Der Einsatz von Maschinen für die Herstellung eines Rahmens aus diesen Profilen soll sich nur noch auf eine Maschine zum Ablängen der Profile entsprechend der jeweils erforderlichen Seitenlänge des Rahmens beschränken, so dass die für einen bestimmten Kanalquerschnitt erforderliche Rahmengrösse leicht herzustellen ist. Die Schenkel von vier den Rahmen bildenden, im wesentlichen im Querschnitt U-förmigen Profilen bilden die Flansche für die Verbindung mit einem vor und/oder hinter dem Rahmen anschliessenden Lüftungskanal, der mit einem ähnlichen Endflansch ausgestattet ist, um durch Verbindung der Flansche den mit Klappen oder Lamellen ausgestatteten Rahmen an den Kanal anzuschliessen. Das Rahmenprofil weist dabei in bekannter Weise auf der Längsmitte des die beiden Schenkel verbindenden Stegs die über die Länge des Rahmenprofils und parallel zu den Schenkeln sich erstreckende, zur einen Stegseite hin offene T-Nut auf. Die vorgenannte Aufgabe wird mit den Massnahmen nach Anspruch 1 in der Weise gelöst, dass eine Mehrzahl von schienenförmigen Körpern, die aneinander anschliessend in die T-Nut jedes der zwei gegenüberliegenden Rahmenprofile des Rahmens eingeschoben sind, jeweils auf der Längsmitte einer Bohrung zur Aufnahme einer Nabe eines Zahnrades aufweist und benachbarte Zahnräder in den aneinander anschliessenden schienenförmigen Körpern zwecks Drehung der Klappen in Eingriff stehen. Für den korrekten Zahneingriff benachbarter Zahnräder und für das genaue Schliessen der Klappen gegeneinander muss man nur bei der Länge der schienenförmigen Körper ein genaues Mass einhalten und kann bei eventuellen Abweichungen bei diesem Längenmass Korrekturen vornehmen, während sich im übrigen für die Herstellung des Rahmens der Einsatz von Maschinen sich nur noch auf eine Maschine zum Ablängen der Profile entsprechend der erforderlichen Seitenlänge des Rahmens beschränkt.

Die beiden anderen Rahmenprofile, die an die für die Aufnahme von Zahnrädern bestimmten Rahmenprofile rechtwinklig anschliessen, sind gleich ausgebildet und in die T-Nut ist ein schienenförmiger Körper mit einem in den Schwenkkreis der benachbarten Klappe hineinragender Anschlag eingeschoben, gegen den die genannte Klappe bei Erreichen der Schliessstellung aller Klappen anliegt. Bei der durch die vorgenannten Massnahmen wesentlich vereinfachten Herstellung und Montage werden drei in der erforderlichen Länge und auf Gehrung zugeschnittene Rahmenprofile zur Bildung von drei Seiten eines Rahmens zusammengefügt und werden von der offenen vierten Rahmenseite aus in die T-Nuten von zwei gegenüberliegenden Rahmenprofilen die die Drehlagerungen für die Klappen bildenden schienenförmigen Körper eingeschoben, wobei die für jede Klappe benötigten jeweils zwei schienenförmigen Körper durch Vormontage bereits mit der Klappe und den Zahnrädern vereinigt sind, sodass abschliessend nur noch die vierte Rahmenseite eingefügt werden muss.

Weitere Einzelheiten der Erfindung ergeben sich aus der nachfolgenden Beschreibung und den Zeichnungen, in denen eine Ausführungsform der Erfindung rein beispielsweise dargestellt ist. Es zeigen :

Fig. 1 die Vorderansicht der rechten Hälfte eines fertigen Rahmens ;

Fig. 2 einen Vertikalschnitt durch den Rahmen gemäss Fig. 1 nach der Linie II-II ;

Fig. 3 einen Horizontalschnitt durch den Rahmen gemäss Fig. 1 nach der Linie III-III ;

Fig. 4 einen Horizontalschnitt durch den Rahmen gemäss Fig. 1 nach der Linie IV-IV ;

Fig. 5 ein einzelnes Rahmenprofil in grösserem Massstab in Ansicht von der Stirnseite ;

Fig. 6 einen Querschnitt durch den Rahmen entsprechend Fig. 3, der durch eine Klammer mit einem anschliessenden Kanal verbunden ist ;

Fig. 7 die Verbindung von Rahmen und Kanal durch eine Klammer gemäss Fig. 6 ausschnittweise von oben gesehen ;

Fig. 8 die Klammer in schaubildlicher Darstellung ;

Fig. 9 und 10 eine Draufsicht und Vorderansicht eines die Drehlagerung aufnehmenden schienenförmigen Körpers ;

Fig. 11 und 12 eine Ansicht der Schmalseite und der Frontseite eines Eckwinkelstücks.

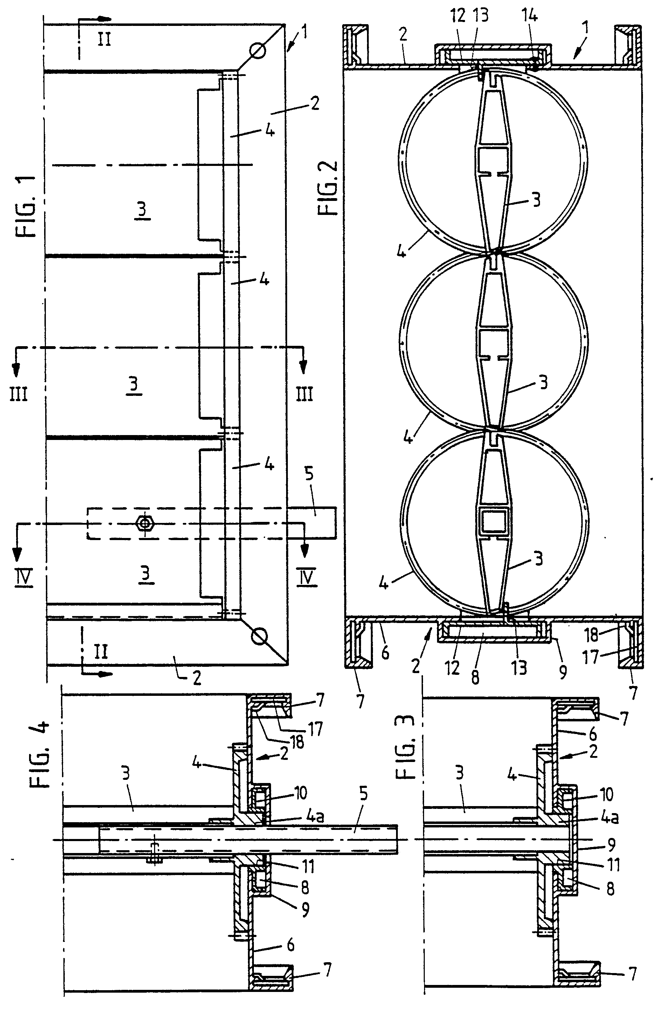

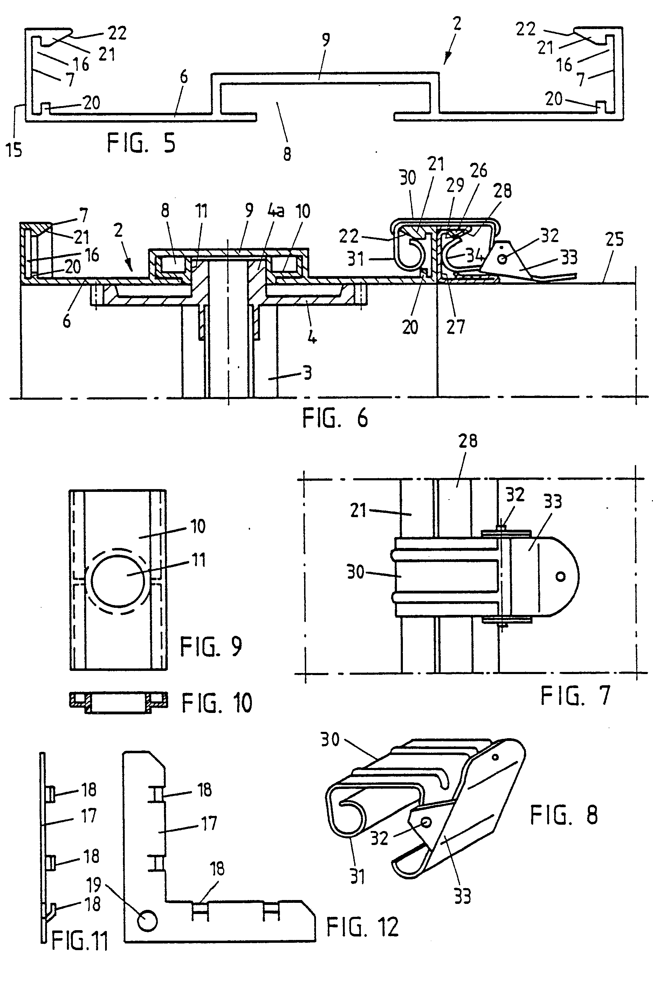

Ein rechteckförmiger Rahmen 1 gemäss Fig. 1 und 2 ist aus vier im Querschnitt gleich ausgebildeten Rahmenprofilen 2 hergestellt, die in einer gelieferten Länge von mehreren Metern entsprechend der geforderten Seitenlänge des Rahmens abgelängt und auf auf Gehrung zugeschnitten werden. In dem Rahmen 1 sind in der gleichen Querschnittsebene übereinander drei Klappen 3 drehbar gelagert, die in der Drehstellung gemäss Fig. 2 die Schliessstellung einnehmen, so dass die Klappen den Luftdurchtritt durch den Rahmen 1 absperren und durch an den Enden der Klappen angeordnete Zahnräder 4 in eine Offenstellung gedreht werden können, wobei die von benachbarten Klappen 3 in Eingriff stehenden Zahnräder 4 die benachbarten Klappen in entgegengesetzter Drehrichtung verschwenken. Für den Drehantrieb ist nur an einer Stelle des Rahmens 1 eine Drehachse 5 durch das Rahmenprofil 2 nach aussen geführt, wie aus Fig. 1 und Fig. 4 hervorgeht.

Das zur Herstellung des Rahmens 1 verwendete Rahmenprofil 2, das in Fig. 5 in grösserem Massstab dargestellt ist, weist als gezogenes Profil einen im wesentlichen U-förmigen Querschnitt auf, bei dem an den Längsrändern eines Stegs 6 zwei Schenkel 7 rechtwinklig anschliessen. Etwa auf der Längsmitte des Stegs 6 ist eine über die Länge des Rahmenprofils 2 sich erstreckende T-Nut 8 ausgebildet, die von einer aus der ebenen Fläche des Stegs 6 vorspringenden flachen Rinne 9 und von der auf der Längsmitte unterbrochenen ebenen Stegfläche 6, die sich über die einander gegenüberliegenden Ränder der Rinne diese teilweise überdeckend hinaus erstreckt, gebildet ist. Der ebene Steg 6, die Rinne 9 und die Schenkel 7 des Rahmenprofils 2 sind einstückig ausgebildet. Die T-Nut 8 dient zum Einschieben von die Drehlagerungen für die Klappen 3 aufnehmenden schienenförmigen Körpern 10, die als Einzelteil in den Figuren 9 und 10 in kleinerem Massstab dargestellt sind. Jeder schienenförmige Körper 10 besitzt eine Länge, die dem Abstand zwischen den Achsen von zwei benachbarten Klappen 3 entspricht. Bei der in den Figuren 1 und 2 dargestellten Ausführungsform des Rahmens 1 sind daher drei schienenförmige Körper 10 hintereinander in ein Rahmenprofil 2 hineingeschoben. Jeder schienenförmige Körper 10 weist in der Mitte eine Bohrung 11 auf, in welche die Nabe 4a eines Zahnrades 4 hineingesteckt ist. Die Nabe 4a des Zahnrades 4 dient somit als Drehzapfen für die mit dem Zahnrad verbundene Klappe 3, die an ihren beiden Enden mit je einem Zahnrad 4 fest verbunden ist.

Das Rahmenprofil 2 mit der T-Nut 8 zum Einschieben der schienenförmigen Körper 10 ermöglicht eine sehr vereinfachte Montage des Rahmens 1 mit darin angeordneten drehbaren Klappen 3. Dabei wird auf je eine Klappe 3 an ihren beiden Enden jeweils ein Zahnrad 4 aufgesteckt und auf die Nabe 4a des Zahnrades 4 jeweils ein schienenförmiger Körper 10 aufgesteckt und dann kann durch Einschieben des schienenförmigen Körpers 10 in die T-Nut 8 des Rahmenprofils 2 diese Einheit in einen drei Rahmenprofile 2 umfassenden Rahmen von der vierten noch offenen Rahmenseite aus eingesetzt werden. Dieser Vorgang wird bei drei in dem Rahmen 1 anzuordnenden Klappen dreimal wiederholt und anschliessend muss nur noch die vierte Rahmenseite eingefügt werden. Im Hinblick auf den richtigen Zahneingriff der Zahnräder 4 können geringe Massabweichungen auch noch durch Veränderung der Länge der schienenförmigen Körper 10 ausgeglichen werden. Das Rahmenprofil 2 ermöglicht somit eine wesentliche Vereinfachung der Montage zur Herstellung eines Rahmens mit darin angeordneten drehbaren Klappen. Dabei enthalten nur zwei gegenüberliegende Rahmenprofile 2 des Rahmens 1 die Drehlagerungen für die Klappen 3. Wie aus Fig. 2 hervorgeht, ist aber auch die T-Nut 8 der beiden anderen Rahmenprofile 2 für die Aufnahme eines weiteren etwas anders ausgebildeten schienenförmigen Körpers 12 vorgesehen. An diesem ist ein in den Schwenkkreis der Klappe 3 hineinragender Anschlag 13 fest angeordnet. Die Breite des schienenförmigen Körpers 12 ist etwas geringer als die lichte Weite der T-Nut 8, so dass der schienenförmige Körper 12 in der T-Nut etwas verschiebbar ist, um am Ende der Montage in der exakten Schliessstellung der Klappe 3 den Anschlag genau zu fixieren, zu welchem Zweck der schienenförmige Körper 12 dann mit einem Niet 14 befestigt wird.

Um aus den Rahmenprofilen 2 einen Rahmen 1 fest zusammenfügen zu können und um diesen Rahmen in zweckmässigerweise ohne viel Montagearbeit an ein Kanalende anflanschen zu können, sind die beiden Schenkel 7 des Rahmenprofils 2 in besonderer Weise ausgebildet und weisen eine parallel zu der zum Anflanschen bestimmten Aussenfläche 15 sich erstreckende T-Nut 16 auf, die zum Einschieben von flachen Eckwinkelstücken 17 gemäss Fig. 11 und 12 bestimmt ist. Der engere Halsteil der T-Nut 16 ist auf der dem Steg 6 zugewandten Seite von einer von der Stegfläche vorstehenden schmalen Leiste 20 gebildet, die sich über die Länge des Rahmenprofils 2 erstreckt, und auf der Leiste 20 gegenüberliegenden Seite von einer an dem verbreiterten Schenkelende von dessen Rand zum Halsteil der T-Nut hin ansteigenden keilförmigen Verdickung 21 gebildet. Zum Zusammenfügen des Rahmens 1 ist in die T-Nut 16 von zwei rechtwinklig aneinander stossenden Rahmenprofilen 2 ein Eckwinkelstück 17 gemäss Fig. 11 und 12 eingeschoben. Dieses besitzt an seinen beiden Schenkeln durch Stanzen und seitliches Herausbiegen einzelne seitlich abstehende Lappen 18, die bei dem eingeschobenen Eckwinkelstück über die Leiste 20 greifen und am Ende der Montage mit einem Werkzeug in die verformbare Leiste 20 hineingedrückt werden, wodurch das Eckwinkelstück 17 an zwei Rahmenprofilen fest verankert ist. Eine Bohrung 19 in jedem Eckwinkelstück 17 dient zur Aufnahme einer nicht dargestellten Schraube, mit der zwei Rahmen aneinander geflanscht werden.

Wenn der aus den Rahmenprofilen 2 bestehende Rahmen 1 an das Ende eines im Querschnitt rechteckförmigen Kanals angeflanscht werden soll, dann besitzt dieses Kanalende einen ähnlich ausgebildeten Endflansch. Die Verbindung des Rahmens mit einem anschliessenden Kanal-Endflansch ist in Fig. 6 dargestellt. Die auf der rechten Seite dargestellte Kanalseitenwand 25 besitzt einen durch zweimaliges rechtwinkliges Abbiegen gebildeten nutenförmigen Kragen 26. In diesen Kragen 26 ist eine im Querschnitt im wesentlichen U-förmige Profilschiene 27 eingeschoben, wobei der gefalzte obere Schenkel 28 den zurückgebogenen Rand des nutenförmigen Kragens 26 aufnimmt. Durch die an der Innenseite ausgebildete Sicke 29 ist der Schenkel 28 der Profilschiene im Querschnitt ebenfalls keilförmig ausgebildet und besitzt somit einen ähnlichen Querschnitt wie die keilförmige Verdickung 21 am Ende des Schenkels 7 des Rahmenprofils 2. Die Schrägfläche 22 der keilförmigen Verdickung 21, die etwa halb so breit wie die Breite des Schenkelendes ist, dient als Anlagefläche für eine Klammer 30, mit der das Rahmenprofil 2 und die Profilschiene 27 gegeneinander gedrückt werden. Diese Klammer 30 ist in Fig. 6 in Seitenansicht, in Fig. 7 von oben gesehen und in Fig. 8 in geöffnetem Zustand dargestellt, besteht im wesentlichen aus Federstahl und besitzt einen als runden Wulst ausgebildeten federnden Arm 31, der unter Federwirkung gegen die Schrägfläche 22 der keilförmigen Verdickung 21 angedrückt ist. Die Feder 30 weist an der dem federnden Arm 31 gegenüberliegenden Seite einen um eine Schwenkachse 32 schwenkbaren Hebel 33 mit einem einwärts gerichteten und ebenfalls als runder Wulst ausgebildeten federnden Arm 34 auf, der gegen die Profilschiene 27 und deren oberen Schenkel 28 angedrückt wird, wenn der Hebel 33 bis zur Anlage gegen die Kanalseitenwand 25 heruntergedrückt worden ist.

Die Schenkel 7 des Rahmenprofils 2 mit der besonderen Ausgestaltung der T-Nut 16 der keilförmigen Verdickung 21 am Schenkelende sind somit speziell für die Anwendung dieser Klammer als Verbindungselement ausgebildet und je nach Seitenlänge des Rahmens 1 werden mehrere Klammern 30 in Abständen voneinander an einer Rahmenseite angeordnet, um eine Flanschverbindung auf sehr einfache Weise herzustellen.

## Patentansprüche

1. Rahmen für die Anordnung von drehbaren Klappen in einem Lüftungskanal, bestehend aus im wesentlichen U-förmigen Querschnitt aufweisenden Rahmenprofilen (2), die etwa auf der Längsmitte des die beiden Schenkel (7) verbindenden Stegs (6) eine über die Länge des Rahmenprofils (2) und parallel zu den Schenkeln sich erstreckende, zur einen Stegseite hin offene T-Nut (8) aufweisen, in die mit Drehlagerungen für die Klappen (3) versehene schienenförmige Körper (10) eingeschoben sind, dadurch gekennzeichnet, dass eine Mehrzahl von schienenförmigen Körpern (10), die aneinander anschliessend in die T-Nut (8) jedes der zwei gegenüberliegenden Rahmenprofile (2) des Rahmens (1) eingeschoben sind, jeweils auf der Längsmitte eine Bohrung (11) zur Aufnahme einer Nabe (4a) eines Zahnrades (4) aufweist und benachbarte Zahnräder (4) in den aneinanderanschliessenden schienenförmigen Körpern (10) in Eingriff stehen, um die mit diesen verbundenen Klappen (3) gemeinsam zu verschwenken, und dass in die T-Nut (8) der an die vorgenannten rechtwinklig anschliessenden, einandergegenüberliegenden Rahmenprofile (2) jeweils ein schienenförmiger Körper (12) mit einem in den Schwenkkreis der benachbarten Klappe (3) hineinragenden Anschlag (13) eingeschoben ist, gegen den die genannte Klappe bei Erreichen der Schliessstellung aller Klappen anliegt.

2. Rahmen nach Anspruch 1, dadurch gekennzeichnet, dass in jedem der zur Bildung eines Verbindungsflansches dienenden Schenkel (7) des Rahmenprofils (2) eine parallel zu der zum Anflanschen bestimmten Aussenfläche sich erstreckende T-Nut (16) zur Aufnahme eines flachen Eckwinkelstücks (17) ausgebildet ist, bei welcher der engere Halsteil der T-Nut (16) auf der dem Steg (6) zugewandten Seite von einer von der Stegfläche vorstehenden schmalen Leiste (20), und auf der gegenüberliegenden Rahmenprofilaussenseite von einer keilförmigen Verdickung (21) mit einer von der T-Nut (16) auswärts verlaufenden Schrägfläche (22) gebildet ist und dass in die T-Nuten (16) von rechtwinklig aneinander anschliessenden Rahmenprofilen (2) jeweils ein Eckwinkelstück (17) eingeschoben ist, welches seitlich abstehende Lappen (18) aufweist, die in die von der Stegfläche des Rahmenprofils vorstehende schmale Leiste (20) unter Verformung derselben zwecks Verbindung der Rahmenprofile (2) hineingedrückt sind.

3. Rahmen nach Anspruch 2, dadurch gekennzeichnet, dass die Schrägfläche (22) der keilförmigen Verdickung (21) am Schenkel (7) des Rahmenprofils (2) etwa halb so breit wie der Schenkel an der Profilaussenseite ist und als Anlagefläche für eine Klammer (30) zum Zusammenklammern des Rahmens und eines gegen dessen Schenkel (7) anzuliegen bestimmten Verbindungsflansches (26-29) eines anschliessenden Kanals (25) dient, wobei ein federnder, als runder Wulst ausgebildeter Arm (31) der Klammer (30) gegen die Schrägfläche (22) der keilförmigen Verdickung (21) des Schenkels (7) angedrückt ist.

**Claims**

1. Frame for arranging rotatable flaps in a ventilation duct, consisting of frame profiles (2), which have an essentially U-shaped cross section and which comprise approximately along the longitudinal centre of the crosspiece (6) connecting the two legs (7) a T-slot (8), which extends over the length of the frame profile (2) and parallel to the legs, which is open towards one side of the crosspiece and in which rail-shaped members (10), which are provided with pivot bearings for the flaps (3), are inserted, characterised in that a plurality of rail-shaped members (10), which are inserted next to one another in the T-slot (8) of each of the two opposite frame profiles (2) of the frame (1), in each case comprise along the longitudinal centre a bore (11) for accommodating a hub (4a) of a gearwheel (4), adjacent gearwheels (4) in the adjoining rail-shaped members (10) are engaged, in order to pivot the flaps (3), which are connected to these gearwheels, together, and that a rail-shaped member (12) with a stop (13), which projects into the pivot circle of the adjacent flap (3) and against which the said flap bears when all the flaps are in the closed position, is in each case inserted in the T-slot (8) of the mutually opposite frame profiles (2), which adjoin the above-mentioned ones at a right angle.

2. Frame according to claim 1, characterised in that a T-slot (16) extending parallel to the outer surface, which is designed to be flange-mounted, for accommodating a flat corner angle (17) is formed in each leg (7) which serves to form a connecting flange of the frame profile (2), the narrower neck part of the T-slot (16) being formed on the side facing the crosspiece (6) by a narrow ridge (20), which projects from the surface of the crosspiece, and on the opposite outside of the frame profile by a wedgeshaped thickened part (21) with an inclined surface (22) extending outwards from the T-slot (16), and that a corner angle (17), which comprises laterally projecting lugs (18), is in each case inserted in the T-slots of frame profiles (2) adjoining at a right angle, the lugs (18) being pressed into the narrow ridge (20), which projects from the surface of the crosspiece of the frame profile, while deforming the ridge, for the purpose of connecting the frame profiles (2).

3. Frame according to claim 2, characterised in that the inclined surface (22) of the wedge-shaped thickened part (21) on the leg (7) of the frame profile (2) is approximately half as wide as the leg on the outside of the profile and serves as a bearing surface for a clamp (30) for clamping together the frame and a connecting flange (26-29), which is designed to be brought to bear against the latter's leg (7), of an adjacent duct (25), with a springmounted arm (31), which is formed as a round protuberance, of the clamp (30) being pressed against the inclined surface (22) of the wedge-shaped thickened part (21) of the leg (7).

**Revendications**

1. Cadre pour la disposition de clapets rotatifs dans une canalisation d'air, se composant de profilés pour cadre présentant essentiellement une section transversale en forme de U (2), qui présentent à peu prés au milieu de la longueur du dos (6) reliant les deux branches (7), une rainure en T s'étendant sur toute la longueur du profilé pour cadre (2) et parallèlement aux branches, ouverte vers un côté du dos, dans laquelle sont insérés des corps (10) en forme de rail pourvus de coussinets de pivotement pour les clapets (3), caractérisé en ce qu'un certain nombre de corps (10) en forme de rail, qui sont insérés contigus les uns aux autres dans la rainure (8) en T de chacun de deux profilés (2) en vis-à-vis du cadre (1), présentent chacun, en leur milieu longitudinal, un perçage (11) pour la réception d'un moyeu (4a) d'une roue dentée (4) et des roues dentées (4) voisines sont en engrènement dans les corps (10) en forme de rail qui sont contigus les uns aux autres, pour faire pivoter ensemble les clapets (3) qui leur sont reliés et en ce que dans la rainure (8) en T des profilés pour cadre (2) situés en vis-à-vis et se raccordant à angle droit au profilé précédent, est inséré un corps (12) en forme de rail avec une butée (13) dépassant dans le cercle de pivotement du clapet (3) voisin, contre laquelle ledit clapet vient reposer lorsqu'est atteinte la position de fermeture de tous les clapets.

2. Cadre selon la revendication 1, caractérisé en ce que dans chacune des branches (7) du profilé (2) pour cadre servant à la formation d'une surface de liaison, est formée une rainure en T (16) s'étendant parallèlement à la surface externe prévue pour brider, pour la réception d'une cornière d'angle plate (17), où la partie plus étroite de gorge de la rainure (16) en T est formée, sur le côté tourné vers le dos (6), d'une petite baguette (20) dépassant de la surface du dos et sur le côté externe du profilé pour cadre situé en vis-à-vis, d'un épaississement cunéiforme (21) avec une surface oblique (22) partant vers l'extérieur de la rainure (16) en T et en ce que dans les rainures (16) en T de profilés pour cadre (2) se raccordant à angle droit, une cornière d'angle (17) est insérée, qui présente des lèvres s'écartant latéralement (18), qui sont pressées dans les petites baguettes (20) dépassant de la surface du dos du profilé pour cadre avec déformation de celles-ci en vue d'une liaison du profilé pour cadre (2).

3. Cadre selon la revendication 2, caractérisé en ce que la surface oblique (22) de l'épaississement cunéiforme (21) sur la branche (7) du profilé pour cadre (2) a à peu prés la moitié de la largeur de la branche du côté externe du profilé et sert de surface d'appui pour une bride de fixation (30) pour l'assemblage du cadre et d'une bride de liaison (26-29) d'une canalisation (25) adjacente laquelle est prévue pour venir reposer contre sa branche (7), et un bras élastique (31) de la bride de fixation (30) ayant la forme d'un bourrelet rond est pressé contre la surface oblique (22) de l'épaississement cunéiforme (21) de la branche (7).

FIG. 1

FIG. 2

FIG. 3

FIG. 4

FIG. 5

FIG. 6

FIG. 9

FIG. 10

FIG. 7

FIG. 11

FIG. 12

FIG. 8